# EUROPEAN PATENT SPECIFICATION

(11) **EP 3 805 928 B1**
(45) Date of publication and mention of the grant of the patent: **22.01.2025**
(21) Application number: 19870775.4
(22) Date of filing: 10.10.2019
(51) Int. Cl.: G06F 11/07, G06F 11/30, G06F 11/34, G06F 21/55, H04L 9/40

(54) **ANALYZING DEVICE, ANALYSIS SYSTEM, ANALYSIS METHOD, AND PROGRAM**
ANALYSEGERÄT, ANALYSESYSTEM, ANALYSEVERFAHREN UND PROGRAMM
DISPOSITIF D'ANALYSE, SYSTÈME D'ANALYSE, PROCÉDÉ D'ANALYSE ET PROGRAMME

(30) Priority: 11.10.2018 JP 2018192412
(43) Date of publication of application: 14.04.2021
(73) Proprietor: NIPPON TELEGRAPH AND TELEPHONE CORPORATION, Chiyoda-ku, Tokyo 100-8116, (JP)
(72) Inventor: TANAKA, Masashi, Musashino-shi, Tokyo 180-8585 (JP); OKANO, Yasushi, Musashino-shi, Tokyo 180-8585 (JP); KOYAMA, Takuma, Musashino-shi, Tokyo 180-8585 (JP); HASEGAWA, Keita, Musashino-shi, Tokyo 180-8585 (JP)
(74) Representative: Murgitroyd & Company
(86) International application number: PCT/JP2019/040009
(87) International publication number: WO 2020/075800

(56) References cited:
- WO-A1-2016/032491
- JP-A- 2018 032 254
- JP-A- H11 240 429
- US-A1- 2009 300 769
- US-B1- 8 839 435

## Description

### TECHNICAL FIELD

The present invention relates to an analysis apparatus, an analysis system, an analysis method, and a program.

### BACKGROUND ART

Conventionally, there have been monitoring/detecting software and monitoring/detecting appliances installed on devices such as IoT (Internet of Things) devices; control devices of IoT devices that control industrial machines such as robots; or network devices that manage connections among these (hereafter, simply referred to as "devices" collectively), to detect cyber-attacks. Also, detection logs of cyber-attacks detected by these devices are uploaded to an analysis server installed at a center.

Such monitoring/detecting software and monitoring/detecting appliances monitor communication logs and system logs obtained from the devices to detect cyber-attacks. Also, the center analyzes the detection logs of cyber-attacks in detail to recognize detailed contents of the cyber-attacks in terms attacking methods and the like.

### RELATED ART DOCUMENTS

US8839435B1 describes an event-based attack detection.

US2009/0300769A1 describes systems and methods for detecting distributed attacks.

WO2016/032491A1 describes distributed detection of malicious cloud actors.

### NON-PATENT DOCUMENTS

[Non-Patent Document 1] "Establishment of an integrated security operation center to support global resolution of security incidents in diverse environments such as IT systems, control systems, and IoT". [online], Internet <URL:https://www.hitachisystems.com/news/2017/20171031_01.html>

### SUMMARY OF INVENTION

### [PROBLEM TO BE SOLVED BY THE INVENTION]

However, there are events that are difficult to detect simply by individually analyzing logs from the devices. For example, in individual analysis, it is difficult to detect events occurring across multiple devices (e.g., large-scale cyber-attacks, etc.).

The present invention has been made in view of the above points, and has an object to be capable of detecting events occurring across multiple devices.

### [MEANS FOR SOLVING THE PROBLEM]

According to a first aspect of the present invention there is provided an analysis apparatus according to claim 1.

According to a second aspect of the present invention there is provided an analysis system according to claim 6.

According to a third aspect of the present invention there is provided an analysis method according to claim 7.

According to a fourth aspect of the present invention there is provided a program according to claim 8.

### [ADVANTAGE OF THE INVENTION]

It is possible to detect events occurring across multiple devices.

### BRIEF DESCRIPTION OF DRAWINGS

FIG. 1 is a diagram illustrating an example of a system configuration in an embodiment according to the present invention;
FIG. 2 is a diagram illustrating an example of a hardware configuration of a monitoring server 10 in an embodiment according to the present invention;
FIG. 3 is a diagram illustrating an example of a hardware configuration of a vehicle 20 in an embodiment according to the present invention;
FIG. 4 is a diagram illustrating an example of a functional configuration of the vehicle 20 and the monitoring server 10 in an embodiment according to the present invention; and
FIG. 5 is a flow chart illustrating an example of processing steps executed by the monitoring server 10.

### EMBODIMENTS OF THE INVENTION

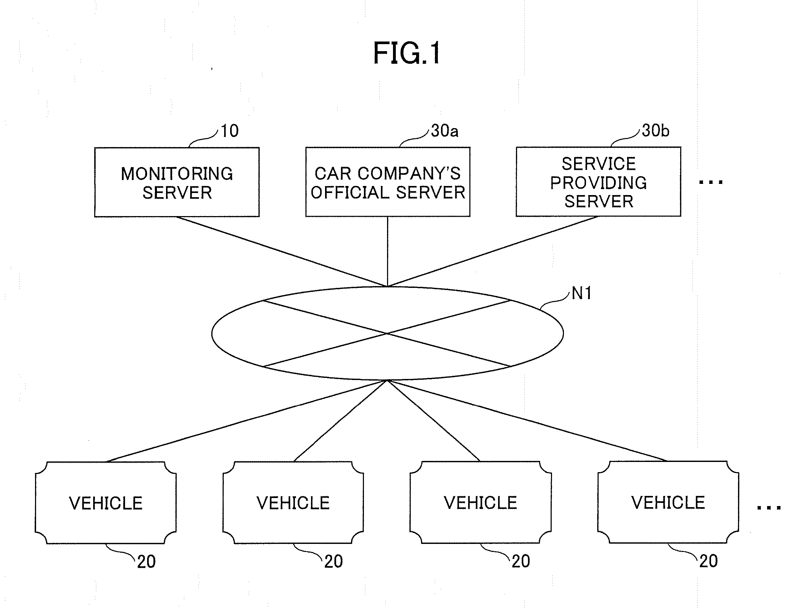

In the following, embodiments according to the present invention will be described based on the drawings. FIG. 1 is a diagram illustrating an example of a system configuration in an embodiment according to the present invention. In FIG. 1, multiple vehicles 20 are automobiles (connected cars) connected to various servers (monitoring server 10, car company's official server 30a, service providing server 30b, etc.) via a network N1 such as the Internet. For example, each vehicle 20 is connected to the network N1 via a wireless network such as a mobile communication network, to communicate with the various servers.

The car company's official server 30a is one or more computers to provide services via the network N1, which is operated by a car company of the vehicles 20, to manage the vehicles 20 (connected cars) and to provide official services of the car company. For example, the car company's official server 30a may provide telematics services.

The service providing server 30b is one or more computers operated by a third party to provide various services to the users of the vehicles 20 for increasing the convenience of the vehicles 20.

The monitoring server 10 is one or more computers to detect an occurrence of events across multiple vehicles 20, based on data transmitted (uploaded) from the vehicle 20.

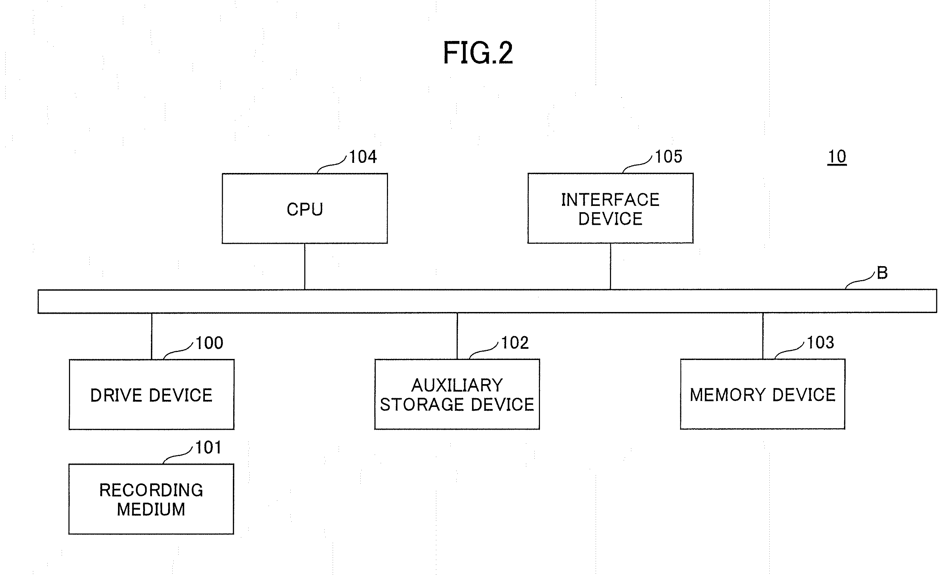

FIG. 2 is a diagram illustrating an example of a hardware configuration of the monitoring server 10 in an embodiment according to the present invention. In FIG. 2, the monitoring server 10 includes a drive device 100, an auxiliary storage device 102, a memory device 103, a CPU 104, an interface device 105, and the like, which are connected with each other via a bus B.

A program that implements processing on the monitoring server 10 is provided with a recording medium 101 such as a CD-ROM. Once the recording medium 101 on which the program is stored is set in the drive device 100, the program is installed in the auxiliary storage device 102 from the recording medium 101 via the drive device 100. However, installation of the program does not need to be executed from the recording medium 101 necessarily, and may be downloaded from another computer via the network. The auxiliary storage device 102 stores the installed programs, and stores necessary files, data, and the like.

The memory device 103 reads and stores the program from the auxiliary storage device 102 when receiving a start command of the program. The CPU 104 executes functions related to the monitoring server 10 according to the program stored in the memory device 103. The interface device 105 is used as an interface for connecting to the network.

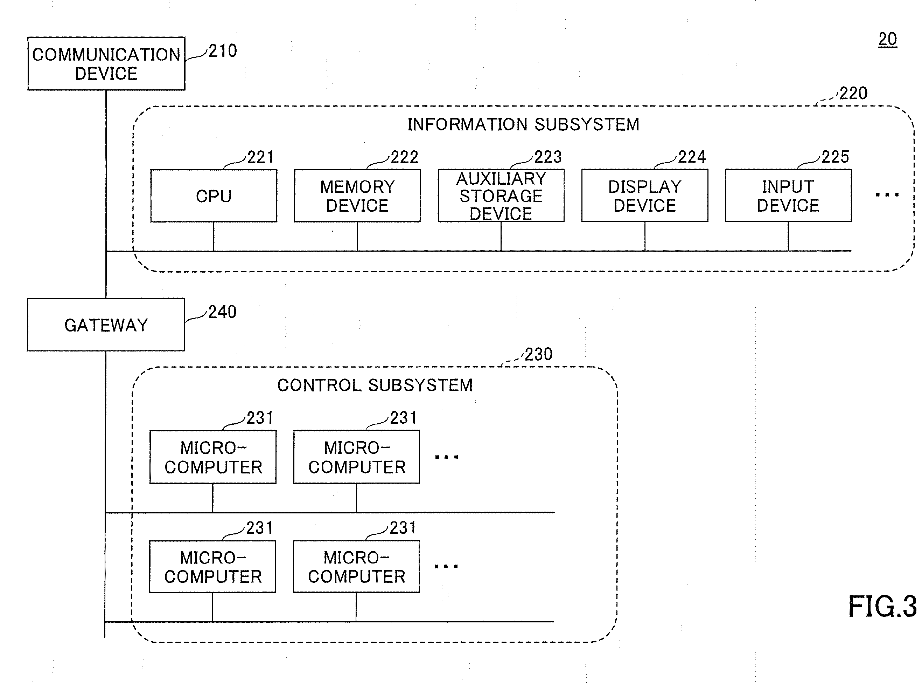

FIG. 3 is a diagram illustrating an example of a hardware configuration of the vehicle 20 in an embodiment according to the present invention. In FIG. 3, the vehicle 20 includes a communication device 210, an information subsystem 220, a control subsystem 230, a gateway 240, and the like.

The communication device 210 includes a communication module for connecting to the network N1, a communication module for communicating with the other vehicles 20 or devices on roads, a communication module for connecting to smartphones and the like via a wireless LAN or short-distance wireless communication, and the like.

The information subsystem 220 is a part to execute information processing according to the installed programs, which includes a CPU 221, a memory device 222, an auxiliary storage device 223, a display device 224, an input device 225, and the like. The auxiliary storage device 223 stores the installed programs and various items of data used by the programs. The memory device 222 reads and stores a program to be activated from the auxiliary storage device 223. The CPU 221 executes functions related to the information subsystem 220 according to the program stored in the memory device 222. The display device 224 displays a GUI (Graphical User Interface) or the like according to the program. The input device 225 is constituted with operational parts such as buttons and a touch panel to be used for inputting various operation commands. Note that, for example, in-vehicle devices such as a car navigation system and a head unit of a car audio system are examples of the information subsystem 220.

The control subsystem 230 is a part to control the behavior of the vehicle 20, which includes multiple microcomputers 231 and the like for various types of control. For example, an ECU (Electronic Control Unit) is an example of the microcomputer 231.

The gateway 240 is a gateway (e.g., CGW (Central Gateway)) for connecting the information subsystem 220 with the control subsystem 230. In other words, the communication protocol handled in the information subsystem 220 is, for example, an IP protocol; and a communication protocol used for communication between the microcomputers 231 in the control subsystem 230 is a non-IP protocol specialized for control (e.g., CAN (Controller Area Network)). Therefore, the gateway 240 is provided to absorb differences between these communication protocols.

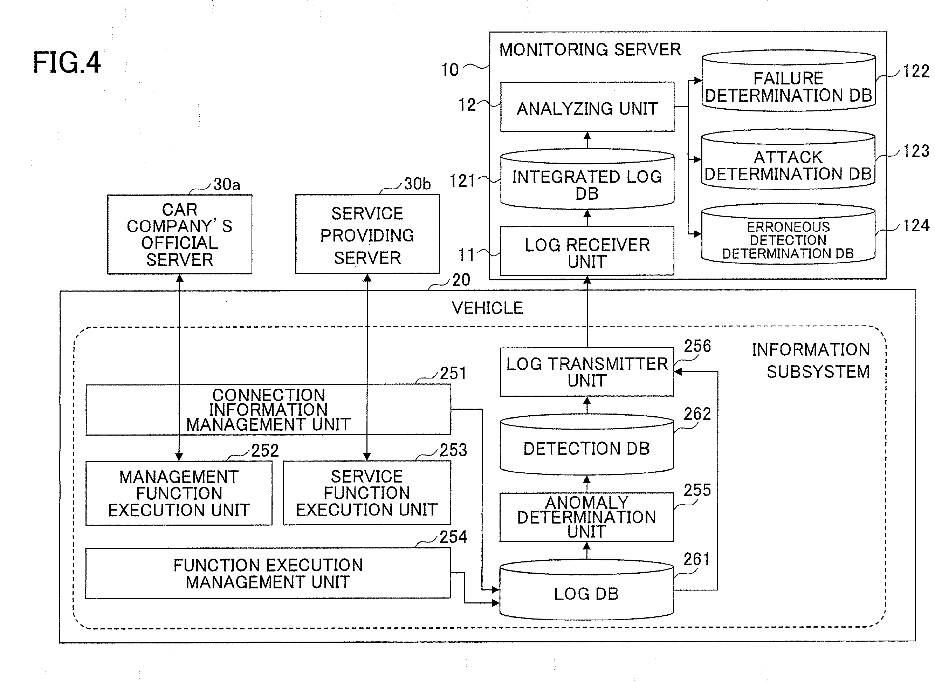

Note that the hardware configuration illustrated in FIG. 4 is merely an example. The hardware configuration of the vehicle 20 is not limited to any particular one, as long as the functions described later can be implemented.

FIG. 4 is a diagram illustrating an example of a functional configuration of the vehicle 20 and the monitoring server 10 in an embodiment according to the present invention. In FIG. 4, the information subsystem 220 of the vehicle 20 includes a connection information management unit 251, an management function execution unit 252, a service function execution unit 253, a function execution management unit 254, an anomaly determination unit 255, a log transmitter unit 256, and the like. These units are implemented by one or more programs installed in the information subsystem 220 that cause the CPU 221 to execute processing. The information subsystem 220 also includes databases (storage unit) such as a log DB 261 and a detection DB 262. These databases (storage unit) can be implemented by using, for example, the memory device 222 or the auxiliary storage device 223.

The management function execution unit 252 accesses the car company's official server 30a that manages the vehicle 20 via the Internet or the like, to execute processing, for example, for remote control of the vehicle 20 and update of the software, using a remote access terminal such as a tablet or a smartphone.

The service function execution unit 253 and the management function execution unit 252 implement the respective functions via an external network (a network outside of the vehicle 20). The service function execution unit 253 is a group of applications that use the services provided by the service providing server 30b by accessing the service providing server 30b via the Internet or the like without going through the car company's official server 30a. For example, a video distribution service or the like may be considered as an example of the service. In this case, the service function execution unit 253 executes downloading and playing back of videos.

Although access to the management function execution unit 252 involved in the control of the vehicle 20 from the service function execution unit 253 cannot be executed, the service function execution unit 253 and the management function execution unit 252 are implemented on the same operating system. Therefore, threats of unauthorized device control via the management function execution unit 252 by attacking the vulnerability of an application of the service function execution unit 253 or the OS are assumed.

The connection information management unit 251 sequentially collects (upon each communication event) log data such as an external communication log, a control communication log, and the like (hereafter, referred to as the "communication log" in the case of not distinguishing the respective logs), and stores the collected log data in the log DB 261, to collectively manage the communication logs.

The external communication log includes a communication log between the management function execution unit 252 or the service function execution unit 253, and an external network such as IP communication; a wireless communication log by Wi-Fi (trademark registered), Blutooth (trademark registered), or the like; a communication log of connection of a physical device to the USB; and the like.

The control communication log corresponds to a non-IP communication log transmitted and received by a protocol such as CAN (Controller Area Network) between the microcomputers 231 of the control subsystem 230.

For example, the communication log is constituted with information on requests and responses that includes a vehicle ID; a timestamp (date and time information); information on a connection source (a subsystem constituting the vehicle 20); information on an external connection destination (an external server such as the car company's official server 30a or the service providing server 30b, a device to be connected by short-distance wireless communication, or a device physically connected through the USB or the like); and an execution command. Alternatively, the communication log may be data of communication contents (communication data including the header information) to which information on date and time (time stamp) is given. Note that the vehicle ID is identification information on a vehicle 20.

The function execution management unit 254 sequentially collects a system log, an application log, a sensor log, and an error log, and stores the collected logs in the log DB 261, to collectively manage these logs. The system log and the application log correspond to log data related to operations and the like of the OS constituting the information subsystem 220 and applications running on the OS. Therefore, log data that includes information on processing other than communication executed by the service function execution unit 253 and the management function execution unit 252 is also included in the system log or application log. The sensor log corresponds to log data that includes positional information (latitude and longitude) on the vehicle 20 measured by a GPS (Global Positioning System) receiver of the vehicle 20; and values measured by various sensors installed on the vehicle 20 such as the speed of the vehicle 20, the acceleration of the vehicle 20, and the like. The error log corresponds to log data that includes information on errors (anomalies) output by the microcomputers 231 constituting the control subsystem 230.

Note that the system log and the application log include, for example, information on the vehicle ID, timestamps, processes of the OS and applications constituting the information subsystem 220 in the vehicle 20; information on actions (operations on objects such as creation, deletion, and modification); information on objects (files, communications, and (child) processes); and the like. Also, the sensor log includes the vehicle ID, time stamps, values measured by the sensors, and the like. Also, the error log includes, for example, the vehicle ID, timestamps, error codes, and the like.

The log DB 261 stores the various logs described above in a time series.

The anomaly determination unit 255 determines whether or not an anomaly occurs in the vehicle 20, based on the log data (the external communication log, control communication log, system log, application log, sensor log, and error log) stored in the log DB 261. However, the resources of the vehicle 20 are limited; therefore, in the case of having detected some anomaly, the anomaly determination unit 255 generates a log presenting a detection result of the anomaly (hereafter, referred to as a "detection log"), and stores the detection log in the detection DB 262. Note that determination (calculation) of the presence or absence of an anomaly based on the log data can be executed by using known techniques. For example, an anomaly score may be determined by inputting the log data into a predetermined trained anomaly detection learning model (e.g., a neural network) that receives log data as input, and outputs an anomaly score. The anomaly score may be 0 or 1 indicating the presence or absence of an anomaly, or may be a value indicating the degree of anomalousness within a range from a minimum value (e.g., "0") to a maximum value (e.g., "1"). In this case, it may be determined that an anomaly has occurred in the case where the anomaly score exceeds a threshold value. Note that in this way, the anomaly determination unit 255 only determines the presence or absence of some anomaly, and does not analyze the anomaly in detail, such as the cause of the anomaly being a cyber-attack or the like.

The log transmitter unit 256 transmits the log data stored in the log DB 261 or the detection DB 262 to the monitoring server 10. The timing of the transmission of the log data may be every time when any item of the log data is stored in the log DB 261 or the detection DB 262 (i.e., in real time), or may be at regular intervals with a batch of data items. Alternatively, when the detection log is stored in the detection DB 262, among the log data items stored in the log DB 261, only log data items used for detecting the anomaly related to the detection log may be transmitted.

Meanwhile, the monitoring server 10 includes a log receiver unit 11, an analysis unit 12, and the like. These units are implemented by one or more programs installed in the monitoring server 10 causing the CPU 104 to execute processing. The monitoring server 10 also uses databases such as an integrated log DB 121, a failure determination DB 122, an attack determination DB 123 and an erroneous detection determination DB 124. These databases can be implemented by using, for example, the auxiliary storage device 102 or a storage device that can be connected to the monitoring server 10 via a network.

The log receiver unit 11 receives log data transmitted from the log transmitter unit 256 of each vehicle 20, and stores the received log data in the integrated log DB 121. The integrated log DB 121 may store the log data separately for each vehicle ID.

The analysis unit 12 executes correlation analysis of the log data stored in the integrated log DB 121, to detect an occurrence of events across multiple vehicles 20. Specifically, based on the log data transmitted from each vehicle 20, the analysis unit 12 determines which one of multiple types of events (in the present embodiment, failure, cyber-attack, erroneous detection of anomaly, or the other) corresponds to the event occurring in the vehicle 20 (classifies the event into one of these types). A determination result indicating a failure is stored in the failure determination DB 122. A determination result indicating a cyber-attack is stored in the attack determination DB 123. A determination result indicating an erroneous detection is stored in the erroneous detection determination DB 124.

Further, based on comparison between the log data items of the respective vehicle 20 related to multiple events classified into the same type, the analysis unit 12 detects an occurrence of events across multiple vehicles 20. Note that the computational resources provided on the monitoring server 10 are ample (large-scale) compared to the computational resources individually provided on each vehicle 20. Therefore, by providing the analysis unit 12 on the monitoring server 10, it is possible for the analysis unit 12 to execute processing using the ample computational resources.

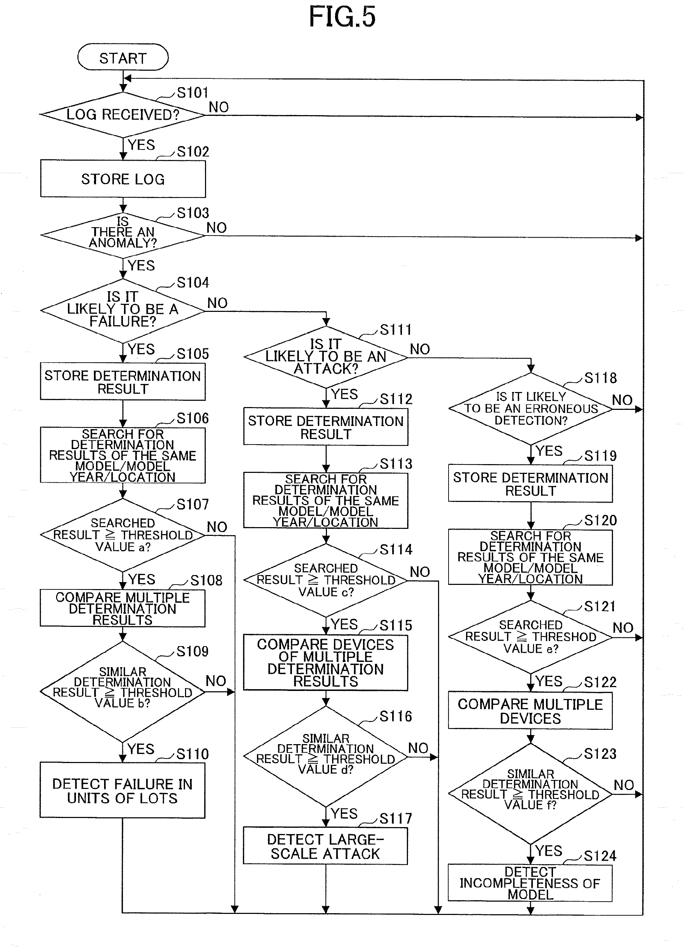

In the following, processing steps executed by the monitoring server 10 will be described. FIG. 5 is a flow chart illustrating an example of the processing steps executed by the monitoring server 10. Note that the processing steps in FIG. 5 can be executed in parallel for multiple vehicles 20.

In response to receiving a group of log data items (hereafter, referred to as the "group of logs (to be processed)") transmitted (uploaded) from the log transmitter unit 256 of a certain vehicle 20 (hereafter, referred to as "the target vehicle 20") (YES at Step S101), the log receiver unit 11 stores the group of logs in the integrated log DB 121 at Step S102.

Next, based on the presence or absence of the detection log in the group of logs, the analysis unit 12 determines the presence or absence of an anomaly related to the target vehicle 20 at Step S103. Note that in the present embodiment, although an example is described in which a detection log is generated only in the case where an anomaly is detected by the anomaly determination unit 255, in the case where the anomaly determination unit 255 generates a detection log indicating that no anomaly is detected even in the case where no anomaly is detected, the analysis unit 12 may refer to the detection log to determine the presence or absence of an anomaly.

If the group of logs does not include a detection log (or if the detection log included in the group of logs indicates that no anomaly is detected) (NO at Step S103), the process returns to Step S101. If the group of logs includes the detection log (or if the detection log included in the group of logs indicates that the anomaly has been detected) (YES at Step S103), the analysis unit 12 determines whether there is a likelihood of a failure in the target vehicle 20 at Step S104. Whether there is a likelihood of a failure may be determined depending on whether the group of logs includes an error log. Alternatively, whether there is a likelihood of a failure may be determined based on whether or not an error log that includes the same vehicle ID as in the detection log, and includes a timestamp indicating date and time within a predetermined period before the date and time of the timestamp of the detection log, is stored in the integrated log DB 121. In other words, if there is a corresponding error log, the analysis unit 12 determines that there is a likelihood of a failure, or if there is no corresponding error log, determines that there is no likelihood of a failure.

If it is determined that there is a likelihood of a failure (i.e., if the event that has occurred in the target vehicle 20 is classified as a failure) (YES at Step S104), the analysis unit 12 stores a determination result of the failure (hereafter, referred to as the "failure determination result") in the failure determination DB 122 at Step S105. The failure determination result includes the vehicle ID of the target vehicle 20, a timestamp indicating the current time, the group of logs, and the like.

Next, the analysis unit 12 searches for a group of failure determination results related to the other vehicles 20 of the same model and model year as the target vehicle 20 that are traveling near the current position of the target vehicle 20 (e.g., within a radius of N km) in the failure determination DB 122 at Step S106. In the present embodiment, it is assumed that the model and model year of each vehicle 20 is included in the vehicle ID. Therefore, it is possible to identify a group of failure determination results of the other vehicles 20 that have the same model and model year as the target vehicle 20 (hereafter, referred to as the "group A of failure determination results"), by comparing the model and model year of the vehicle ID of the target vehicle 20 with the model and model year of the vehicle ID of each of the failure determination results of the other vehicles 20 stored in the failure determination DB 122.

Also, the current position of the target vehicle 20 can be identified based on the latest positional information in the sensor log included in the group of logs. Also, the position of the vehicle 20 related to each failure determination result can be identified based on the latest positional information in the sensor log included in the failure determination result. Therefore, the group of failure determination results of the other vehicles 20 traveling near the current position of the target vehicle 20 that have the same model and model year as the target vehicle 20 corresponds to, among the group A of failure determination results, a set of failure determination results having time stamps different within a threshold value from the time stamp in the failure determination result of the target vehicle 20, in which the difference between the position according to the positional information indicated in the sensor log and the position according to the positional information indicated in the sensor log of the failure determination result of the target vehicle 20 is within N km (hereafter, referred to as the "group B of failure determination results").

Next, the analysis unit 12 determines whether or not the number of failure determination results included in the group B of failure determination results is greater than or equal to a threshold value 'a' at Step S107. Note that at Step S107, it may be determined whether or not the number of failure determination results included in the group A of failure determination results is greater than or equal to the threshold value 'a'. In other words, it may be determined such that the positional relationship with the target vehicle 20 is not taken into account.

If the number of failure determination results is less than the threshold value 'a' (NO at Step S107), the process returns to Step S101. In this case, the failure of the target vehicle 20 is treated as an individual event.

If the number of failure determination results is greater than or equal to the threshold value 'a' (YES at S107), the analysis unit 12 compares each corresponding failure determination result with the failure determination result of the target vehicle 20 at Step S108, and among the corresponding failure determination results, determines whether or not the number of failure determination results showing a similar tendency with respect to the failure determination result of the target vehicle 20 is greater than or equal to a threshold value 'b' at Step S109. In other words, for the failure determination results of multiple vehicles 20, comparative analysis is performed with reference to the logs of the multiple vehicles 20. For example, various log data items included in each corresponding failure determination result may be compared with the various log data items included in the failure determination result of the target vehicle 20. The log data items to be compared may be limited to the error log and the control communication log. Whether or not there is a similarity may be determined using a known method of calculating the degree of similarity of multiple parameters. Alternatively, similarity of the two may be evaluated based on whether or not an anomaly pattern that does not normally occur is observed in both of the system log or control communication log included in the failure determination result of the target vehicle 20, and the system log or control communication log included in the failure determination result of a vehicle to be compared.

If the number of failure determination results is less than the threshold value 'b' (NO at Step S109), the process returns to Step S101. In this case, the failure of the target vehicle 20 is treated as an individual event.

If the number of failure determination results is greater than or equal to the threshold value 'b' (YES at S109), the analysis unit 12 detects that failures are occurring in units of lots at Step S110. Failures in units of lots correspond to, for example, failures in the vehicle 20 having the same model and model year. In other words, an occurrence of the same failures is detected across multiple vehicles 20 in units of lots. In this case, the analysis unit 12 may transmit a notice indicating a likelihood of the failure in units of lots, which includes the model; model year; and the like of the target vehicle 20, for example, to the car company's official server 30a or the like. Based on the notice, the car company may replace physical components of the vehicle 20 that may be causing the failure.

Alternatively, if having determined at Step S104 that there is no likelihood of a failure (NO at Step S104), the analysis unit 12 determines whether or not there is a likelihood of a cyber-attack at Step S111. Whether or not there is a likelihood of a cyber-attack may be determined, for example, with reference to the external communication log among the group of logs. As an example, the analysis unit 12 analyzes the degree of maliciousness of a connection destination presented by information on the external connection destination in the external communication log. The degree of maliciousness may be analyzed with reference to a blacklist held in the monitoring server 10; may be analyzed by focusing on transitions of HTTP transmission to detect a connection to a malicious web site caused by a malicious redirection, by using techniques of machine learning; or may be analyzed by using any other known techniques. Also, in the case where the degree of maliciousness of the connection destination is high, the analysis unit 12 may determine the presence or absence of a cyber-attack based on whether or not the system log, application log, or the like of the information subsystem 220 as the connection source matches a predetermined pattern.

If it is determined that there is a likelihood of a cyber-attack (i.e., if the event that has occurred in the target vehicle 20 is classified as a cyber-attack) (YES at Step S111), the analysis unit 12 stores a determination result of the cyber-attack (hereafter, referred to as the "attack determination result") in the attack determination DB 123 at Step S112. The attack determination result includes the vehicle ID of the target vehicle 20, a timestamp indicating the current time, the group of logs, and the like.

Next, the analysis unit 12 searches for a group of attack determination results related to the other vehicles 20 of the same model and model year as the target vehicle 20 that are traveling near the current position of the target vehicle 20 (e.g., within a radius of N km) in the attack determination DB 123 at Step S113. The method of identifying the group of attack determination results may be substantially the same as in Step S106.

If the number of attack determination results is less than a threshold value 'c' (NO at Step S114), the process returns to Step S101. In this case, the cyber-attack on the target vehicle 20 is treated as an individual event.

If the number of attack determination results is greater than or equal to the threshold value 'c' (YES at S114), the analysis unit 12 compares each corresponding attack determination result with the attack determination result of the target vehicle 20 at Step S115, and among the corresponding attack determination results, determines whether or not the number of attack determination results showing a similar tendency with respect to the attack determination result of the target vehicle 20 is greater than or equal to a threshold value 'd' at Step S116. In other words, for the attack determination results of multiple vehicles 20, comparative analysis is performed with reference to the logs of the multiple vehicles 20. For example, various log data items included in each corresponding attack determination result may be compared with the various log data items included in the attack determination result of the target vehicle 20. Whether or not there is a similarity may be determined using a known method of calculating the degree of similarity of multiple parameters. Alternatively, similarity of the attack determination results may be determined based on whether or not an anomaly pattern that does not normally occur (e.g., a search for a file structure in the system, an execution of a shell command resulting in an upgrade of permission, etc.) is observed in both of the system log included in the attack determination result of the target vehicle 20 and the system log included in the attack determination result of a vehicle to be compared; or whether or not anomaly patterns of control communication that do not normally occur (e.g., incoming, etc.) are observed in both of the external communication log included in the attack determination result of the target vehicle 20 and the external communication log included in the attack determination result of the vehicle to be compared; or whether or not anomaly patterns that do not normally occur (e.g., transmission timings, payload values, etc.) are frequently observed in both of the control communication log included in the attack determination result of target vehicle 20 and the control communication log included in the attack determination result of the vehicle to be compared. In other words, if any of the above anomaly patterns is observed in both, the two may be determined to be similar.

If the number of attack determination results is less than the threshold value 'd' (NO at Step S116), the process returns to Step S101. In this case, the attack on the target vehicle 20 is treated as an individual event.

If the number of attack determination results is greater than or equal to the threshold value 'd' (YES at S116), the analysis unit 12 detects an occurrence of a large-scale cyber-attack (across the multiple vehicles 20) at Step S117. In this case, the analysis unit 12 may transmit a notice indicating detection of a likelihood of a large-scale cyber-attack, which includes the attack determination result of the target vehicle 20; attack determination results determined to be similar to the attack determination result; information indicating a connection destination that has been determined to have a high degree of maliciousness; and the like, for example, to the car company's official server 30a or the like. In response to the notice, the car company's official server 30a may quickly deter the spread of the cyber-attack, by blocking external communication of each vehicle 20 identified by the vehicle ID according to the attack determination result included in the notice, or by blocking external communication to the connection destination.

Alternatively, if having determined at Step S111 that there is no likelihood of a cyber-attack (NO at Step S111), the analysis unit 12 determines whether or not there is a likelihood of an erroneous detection at Step S118. An erroneous detection means an error in a determination of an anomaly by the anomaly determination unit 255 of the target vehicle 20. Whether or not there is a likelihood of an erroneous detection may be determined, for example, with reference to the detection log and the control communication log of the group of logs. As an example, the analysis unit 12 may compare feature information extracted from the control communication log that was determined to be an erroneous detection in the past (i.e., the control communication log that has been known to include an erroneous detection), with feature information extracted from the control communication log in the group of logs, to determine whether or not there is a likelihood of an erroneous detection based on a similar pattern of communication intervals and transitions of values. Note that "determined to be an erroneous detection in the past" means, for example, a fact that as a result of an investigation performed manually or in any other ways, the event turned out to be an erroneous detection in the past.

If it is determined that there is a likelihood of an erroneous detection (i.e., if the event that has occurred in the target vehicle 20 is classified as an erroneous detection) (YES at Step S118), the analysis unit 12 stores a determination result of the erroneous detection (hereafter, referred to as the "erroneous detection determination result") in the erroneous detection determination DB 124 at Step S119. The erroneous detection determination result includes the vehicle ID of the target vehicle 20, a timestamp indicating the current time, the group of logs, and the like.

Next, the analysis unit 12 searches for a group of erroneous detection determination results related to the other vehicles 20 of the same model and model year as the target vehicle 20 that are traveling near the current position of the target vehicle 20 (e.g., within a radius of N km) in the erroneous detection determination DB 124 at Step S120. The method of identifying the group of erroneous detection determination results may be substantially the same as in Step S106.

If the number of erroneous detection determination results is less than the threshold value 'e' (NO at Step S121), the process returns to Step S101. In this case, the erroneous detection of the target vehicle 20 is treated as an individual event.

If the number of erroneous detection determination results is greater than or equal to the threshold value 'e' (YES at S121), the analysis unit 12 compares each corresponding erroneous detection determination result with the erroneous detection determination result of the target vehicle 20 at Step S122, and among the corresponding erroneous detection determination results, determines whether or not the number of erroneous detection determination results showing a similar tendency with respect to the erroneous detection determination result of the target vehicle 20 is greater than or equal to a threshold value 'f' at Step S123. In other words, for the erroneous detection determination results of multiple vehicles 20, comparative analysis is performed with reference to the logs of the multiple vehicles 20. For example, various log data items included in each corresponding erroneous detection determination result may be compared with the various log data items included in the erroneous detection determination result of the target vehicle 20. Whether or not there is a similarity may be determined using a known method of calculating the degree of similarity of multiple parameters. Alternatively, a pattern of control communication represented by the control communication log included in the erroneous detection determination result of the target vehicle 20 (e.g., communication intervals, transition of communication data, etc.) may be may be compared with a pattern of control communication represented by the control communication log in the erroneous detection determination result of a vehicle to be compared, to evaluate the similarity (e.g., similarity may be calculated by a known method). An erroneous detection determination result of a vehicle to be compared, in which the degree of similarity of the pattern of control communication is greater than or equal to a threshold value, may be determined as an erroneous detection determination result in which the tendency is similar to the erroneous detection determination result of the target vehicle 20.

If the number of erroneous detection determination results is less than the threshold value 'f' (NO at Step S123), the process returns to Step S101. In this case, the erroneous detection of the target vehicle 20 is treated as an individual event. By treating in this way, for example, in the case where an anomaly occurs in control communication due to the influence of electromagnetic waves or the like, and the erroneous detection occurs only in a certain area, there is a high likelihood of the number of erroneous detection determination results being less than the threshold value 'f'; therefore, it is possible to avoid determining that the anomaly detection learning model includes a defect.

If the number of erroneous detection determination results is greater than or equal to the threshold value 'f' (YES at S123), the analysis unit 12 detects that the anomaly detection learning model used by the anomaly determination unit 255 includes a defect in the multiple vehicles 20 at Step S124. In this case, the analysis unit 12 may transmit a notice indicating detection of a likelihood of a defect in the anomaly detection learning model, which includes the erroneous detection determination result of the target vehicle 20; erroneous detection determination results determined to be similar to the erroneous detection determination result; and the like, for example, to the car company's official server 30a or the like. In response to the notice, the car company's official server 30a may update the anomaly detection learning model of each vehicle 20, or may update the program that causes the CPU 221 to function as the management function execution unit 252.

Note that in the present embodiment, although the vehicles 20 have been described as examples of devices, the present embodiment may be applied to any other devices having communication functions. For example, the present embodiment may be applied to industrial control devices such as robots in factories; sensors, audio devices, home appliances, communication terminals (smartphones, tablet terminals, etc.) installed in various areas; and devices commonly called IoT (Internet of Things) devices.

As described above, according to the present embodiment, based on log data from multiple devices (vehicles 20), devices in which events having a similar tendency are identified, and by comparing and analyzing the identified multiple items of log data, it is possible to detect a cyber-attack executed in a wide area, a defect in an anomaly detection learning model, a failure occurring in units of manufacturing lots, and the like, which are events that cannot be understood by simply analyzing a single device in detail. In other words, it is possible to detect events occurring across multiple devices.

Note that in the present embodiment, the monitoring server 10 is an example of an analysis apparatus. The log receiver unit 11 is an example of a receiver unit. The analysis unit 12 is an example of a determination unit and a detection unit.

As described above, embodiments according to the present invention have been described in detail; note that the present invention is not limited to such specific embodiments, and various modifications and alterations can be made within the scope of the subject matters of the present invention described in the claims.

The present application claims priority to Japanese Patent Application No. 2018-192412, filed on October 11, 2018.

### [Description of reference symbols]

10 monitoring server
11 log receiver unit
12 analysis unit
20 vehicle
30a car company's official server
30b service providing server
100 drive device
101 recording medium
102 auxiliary storage device
103 memory device
104 CPU
105 interface device
121 integrated log DB
122 failure determination DB
123 attack determination DB
124 erroneous detection determination DB
210 communication device
221 CPU
222 memory device
223 auxiliary storage device
224 display device
225 input device
220 information subsystem
230 control subsystem
231 microcomputer
240 gateway
251 connection information management unit
252 management function execution unit
253 service function execution unit
254 function execution management unit
255 anomaly determination unit
256 log transmitter unit
261 log DB
262 detection DB
B bus

## Claims

1. An analysis apparatus comprising:
a receiver unit configured to receive log data transmitted from each device among a plurality of devices connected to a network, via the network;
a determination unit configured to determine, for each device, which one of a plurality of types of events corresponds to an event that has occurred in each device, based on the log data transmitted from each device;
the determination unit is further configured to store a determination result, including associated log data, for each event that has occurred in a device;
the determination unit is further configured to search for a group of determination results of the same event type relating to other devices among the plurality of devices having similar characteristics to the device; and
a detection unit configured to detect an occurrence of events across the plurality of devices, based on a comparison of the log data of the determination results of the group of determination results as determined by the determination unit.

2. The analysis apparatus as claimed in claim 1, wherein the determination unit determines which one of the plurality of types of events corresponds to the event occurring in each device, based on the log data upon detection of an anomaly in each device.

3. The analysis apparatus as claimed in claim 2, wherein the determination unit determines whether the event occurring in each device is an erroneous detection of the anomaly.

4. The analysis apparatus as claimed in any one of claims 1 to 3, wherein the determination unit determines whether the event of the device occurring in each device is a failure.

5. The analysis apparatus as claimed in any one of claims 1 to 4, wherein the determination unit determines whether an event occurring in each device is a cyber-attack.

6. An analysis system comprising:
a plurality of devices; and
an analysis apparatus connected to each device among the plurality of devices via a network,
wherein the analysis apparatus includes
a receiver unit configured to receive log data transmitted from each device among a plurality of devices connected to a network, via the network,
a determination unit configured to determine, for each device, which one of a plurality of types of events corresponds to an event that has occurred in each device, based on the log data transmitted from each device,
the determination unit is further configured to store a determination result, including associated log data, for each event that has occurred in a device;
the determination unit is further configured to search for a group of determination results of the same event type relating to other devices among the plurality of devices having similar characteristics to the device; and
a detection unit configured to detect an occurrence of events across the plurality of devices, based on a comparison of the log data of the determination results of the group of determination results as determined by the determination unit,
wherein each device includes
a connection information management unit configured to collectively manage log data related to external communication and log data related to control communication generated in each device,
a function execution management unit configured to collectively manage log data related to operations of an application and an operating system in each device,
an anomaly determination unit configured to detect an anomaly of one of a plurality of types based on the log data without determining a type of an event occurring in each device, and
a log transmitter unit configured to transmit the log data to the analysis apparatus.

7. An analysis method executed by a computer, the analysis method comprising:
a receiving step of receiving log data transmitted from each device among a plurality of devices connected to a network, via the network,
a determining step of determining, for each device, which one of a plurality of types of events corresponds to an event that has occurred in each device, based on the log data transmitted from each device,
a storing step of storing a determination result, including associated log data, for each event that has occurred in a device;
a searching step of searching for a group of determination results of the same event type relating to other devices among the plurality of devices having similar characteristics to the device; and
a detecting step of detecting an occurrence of events across the plurality of devices, based on a comparison of the log data of the determination results of the group of determination results as determined by the determining step.

8. A program for causing a computer to function as the respective units as claimed in any one of claims 1 to 5.

## Patentansprüche

1. Eine Analysevorrichtung, die Folgendes beinhaltet:
eine Empfängereinheit, die konfiguriert ist, um Logdaten, die von jedem Gerät aus einer Vielzahl von mit einem Netzwerk verbundenen Geräten übertragen werden, über das Netzwerk zu empfangen;
eine Bestimmungseinheit, die konfiguriert ist, um basierend auf den Logdaten, die von jedem Gerät übertragen werden, für jedes Gerät zu bestimmen, welche einer Vielzahl von Ereignisarten einem Ereignis entspricht, das in jedem Gerät stattgefunden hat;
wobei die Bestimmungseinheit ferner konfiguriert ist, um für jedes Ereignis, das in einem Gerät stattgefunden hat, ein Bestimmungsergebnis, das assoziierte Logdaten umfasst, zu speichern;
wobei die Bestimmungseinheit ferner konfiguriert ist, um nach einer Gruppe von Bestimmungsergebnissen derselben Ereignisart, die sich auf andere Geräte aus der Vielzahl von Geräten, die ähnliche Merkmale wie das Gerät aufweisen, beziehen, zu suchen; und
eine Erkennungseinheit, die konfiguriert ist, um basierend auf einem Vergleich der Logdaten der Bestimmungsergebnisse der Gruppe von Bestimmungsergebnissen wie von der Bestimmungseinheit bestimmt ein Stattfinden von Ereignissen über die Vielzahl von Geräten zu erkennen.

2. Analysevorrichtung gemäß Anspruch 1, wobei die Bestimmungseinheit basierend auf den Logdaten bei Erkennung einer Anomalie in jedem Gerät bestimmt, welche der Vielzahl von Ereignisarten dem Ereignis entspricht, das in jeder Vorrichtung stattfindet.

3. Analysevorrichtung gemäß Anspruch 2, wobei die Bestimmungseinheit bestimmt, ob das Ereignis, das in jedem Gerät stattfindet, ein fälschliches Erkennen der Anomalie ist.

4. Analysevorrichtung gemäß einem der Ansprüche 1 bis 3, wobei die Bestimmungseinheit bestimmt, ob das Ereignis des Geräts, das in jedem Gerät stattfindet, ein Versagen ist.

5. Analysevorrichtung gemäß einem der Ansprüche 1 bis 4, wobei die Bestimmungseinheit bestimmt, ob ein Ereignis, das in jedem Gerät stattfindet, eine Cyberattacke ist.

6. Ein Analysesystem, das Folgendes beinhaltet:
eine Vielzahl von Geräten; und
eine Analysevorrichtung, die mit jedem Gerät aus der Vielzahl von Geräten über ein Netzwerk verbunden ist,
wobei die Analysevorrichtung Folgendes umfasst:
eine Empfängereinheit, die konfiguriert ist, um Logdaten, die von jedem Gerät aus einer Vielzahl von mit einem Netzwerk verbundenen Geräten übertragen werden, über das Netzwerk zu empfangen,
eine Bestimmungseinheit, die konfiguriert ist, um basierend auf den Logdaten, die von jedem Gerät übertragen werden, für jedes Gerät zu bestimmen, welche einer Vielzahl von Ereignisarten einem Ereignis entspricht, das in jedem Gerät stattgefunden hat,
wobei die Bestimmungseinheit ferner konfiguriert ist, um für jedes Ereignis, das in einem Gerät stattgefunden hat, ein Bestimmungsergebnis, das assoziierte Logdaten umfasst, zu speichern;
wobei die Bestimmungseinheit ferner konfiguriert ist, um nach einer Gruppe von Bestimmungsergebnissen derselben Ereignisart, die sich auf andere Geräte aus der Vielzahl von Geräten, die ähnliche Merkmale wie das Gerät aufweisen, beziehen, zu suchen; und
eine Erkennungseinheit, die konfiguriert ist, um basierend auf einem Vergleich der Logdaten der Bestimmungsergebnisse der Gruppe von Bestimmungsergebnissen wie von der Bestimmungseinheit bestimmt ein Stattfinden von Ereignissen über die Vielzahl von Geräten zu erkennen,
wobei jedes Gerät Folgendes umfasst:
eine Verbindungsinformationsverwaltungseinheit, die konfiguriert ist, um Logdaten, die sich auf externe Kommunikation beziehen, und Logdaten, die sich auf Steuerungskommunikation, die in jedem Gerät erzeugt wird, beziehen, kollektiv zu verwalten,
eine Funktionsausführungsverwaltungseinheit, die konfiguriert ist, um Logdaten, die sich auf den Betrieb einer Anwendung und eines Betriebssystems in jeder Vorrichtung beziehen, kollektiv zu verwalten,
eine Anomaliebestimmungseinheit, die konfiguriert ist, um eine Anomalie einer einer Vielzahl von Arten basierend auf den Logdaten zu erkennen, ohne eine Ereignisart, die in jedem Gerät stattfindet, zu bestimmen, und
eine Logüberträgereinheit, die konfiguriert ist, um die Logdaten an die Analysevorrichtung zu übertragen.

7. Ein Analyseverfahren, das von einem Computer ausgeführt wird, wobei das Analyseverfahren Folgendes beinhaltet:
einen Empfangsschritt zum Empfangen von Logdaten, die von jedem Gerät aus einer Vielzahl von mit einem Netzwerk verbundenen Geräten übertragen werden, über das Netzwerk,
einen Bestimmungsschritt zum Bestimmen, für jedes Gerät, welche einer Vielzahl von Ereignisarten einem Ereignis entspricht, das in jedem Gerät stattgefunden hat,
basierend auf den Logdaten, die von jedem Gerät übertragen werden,
einen Speicherungsschritt zum Speichern eines Bestimmungsergebnisses, das assoziierte Logdaten umfasst, für jedes Ereignis, das in einem Gerät stattgefunden hat;
einen Suchschritt zum Suchen nach einer Gruppe von Bestimmungsergebnissen derselben Ereignisart, die sich auf andere Geräte aus der Vielzahl von Geräten, die ähnliche Merkmale wie das Gerät aufweisen, beziehen; und
einen Erkennungsschritt zum Erkennen eines Stattfindens von Ereignissen über die Vielzahl von Geräten basierend auf einem Vergleich der Logdaten der Bestimmungsergebnisse der Gruppe von Bestimmungsergebnissen, wie von dem Bestimmungsschritt bestimmt.

8. Ein Programm zum Bewirken, dass ein Computer als die jeweiligen Einheiten gemäß einem der Ansprüche 1 bis 5 dient.

## Revendications

1. Un appareil d'analyse comprenant :
une unité récepteur configurée pour recevoir des données de journal transmises à partir de chaque dispositif parmi une pluralité de dispositifs connectés à un réseau, par l'intermédiaire du réseau ;
une unité de détermination configurée pour déterminer, pour chaque dispositif, quel type parmi une pluralité de types d'événements correspond à un événement qui est survenu dans chaque dispositif, sur la base des données de journal transmises à partir de chaque dispositif ;
l'unité de détermination est configurée en outre pour stocker un résultat de détermination, incluant des données de journal associées, pour chaque événement qui est survenu dans un dispositif ;
l'unité de détermination est configurée en outre pour rechercher un groupe de résultats de détermination du même type d'événement se rapportant à d'autres dispositifs parmi la pluralité de dispositifs présentant des caractéristiques similaires au dispositif ; et
une unité de détection configurée pour détecter une survenue d'événements sur l'ensemble de la pluralité de dispositifs, sur la base d'une comparaison des données de journal des résultats de détermination du groupe de résultats de détermination tel que déterminé par l'unité de détermination.

2. L'appareil d'analyse tel que revendiqué dans la revendication 1, dans lequel l'unité de détermination détermine quel type parmi la pluralité de types d'événements correspond à l'événement survenant dans chaque dispositif, sur la base des données de journal lors de la détection d'une anomalie dans chaque dispositif.

3. L'appareil d'analyse tel que revendiqué dans la revendication 2, dans lequel l'unité de détermination détermine si l'événement survenant dans chaque dispositif est une détection erronée de l'anomalie.

4. L'appareil d'analyse tel que revendiqué dans n'importe laquelle des revendications 1 à 3, dans lequel l'unité de détermination détermine si l'événement du dispositif survenant dans chaque dispositif est une panne.

5. L'appareil d'analyse tel que revendiqué dans n'importe laquelle des revendications 1 à 4, dans lequel l'unité de détermination détermine si un événement survenant dans chaque dispositif est une cyberattaque.

6. Un système d'analyse comprenant :
une pluralité de dispositifs ; et
un appareil d'analyse connecté à chaque dispositif parmi la pluralité de dispositifs par l'intermédiaire d'un réseau,
dans lequel l'appareil d'analyse inclut
une unité récepteur configurée pour recevoir des données de journal transmises à partir de chaque dispositif parmi une pluralité de dispositifs connectés à un réseau, par l'intermédiaire du réseau,
une unité de détermination configurée pour déterminer, pour chaque dispositif, quel type parmi une pluralité de types d'événements correspond à un événement qui est survenu dans chaque dispositif, sur la base des données de journal transmises à partir de chaque dispositif,
l'unité de détermination est configurée en outre pour stocker un résultat de détermination, incluant des données de journal associées, pour chaque événement qui est survenu dans un dispositif ;
l'unité de détermination est configurée en outre pour rechercher un groupe de résultats de détermination du même type d'événement se rapportant à d'autres dispositifs parmi la pluralité de dispositifs présentant des caractéristiques similaires au dispositif ; et
une unité de détection configurée pour détecter une survenue d'événements sur l'ensemble de la pluralité de dispositifs, sur la base d'une comparaison des données de journal des résultats de détermination du groupe de résultats de détermination tel que déterminé par l'unité de détermination,
dans lequel chaque dispositif inclut
une unité de gestion d'informations de connexion configurée pour gérer collectivement des données de journal relatives à une communication externe et des données de journal relatives à une communication de commande générées dans chaque dispositif,
une unité de gestion d'exécution de fonction configurée pour gérer collectivement des données de journal relatives à des opérations d'une application et d'un système d'exploitation dans chaque dispositif,
une unité de détermination d'anomalie configurée pour détecter une anomalie d'un type parmi une pluralité de types sur la base des données de journal sans déterminer un type d'un événement survenant dans chaque dispositif, et
une unité transmetteur de journal configurée pour transmettre les données de journal à l'appareil d'analyse.

7. Un procédé d'analyse exécuté par un ordinateur, le procédé d'analyse comprenant :
une étape de réception consistant à recevoir des données de journal transmises à partir de chaque dispositif parmi une pluralité de dispositifs connectés à un réseau, par l'intermédiaire du réseau,
une étape de détermination consistant à déterminer, pour chaque dispositif, quel type parmi une pluralité de types d'événements correspond à un événement qui est survenu dans chaque dispositif, sur la base des données de journal transmises à partir de chaque dispositif,
une étape de stockage consistant à stocker un résultat de détermination, incluant des données de journal associées, pour chaque événement qui est survenu dans un dispositif ;
une étape de recherche consistant à rechercher un groupe de résultats de détermination du même type d'événement se rapportant à d'autres dispositifs parmi la pluralité de dispositifs présentant des caractéristiques similaires au dispositif ; et
une étape de détection consistant à détecter une survenue d'événements sur l'ensemble de la pluralité de dispositifs, sur la base d'une comparaison des données de journal des résultats de détermination du groupe de résultats de détermination tel que déterminé par l'étape de détermination.

8. Un programme servant à amener un ordinateur à jouer le rôle des unités respectives telles que revendiquées dans n'importe laquelle des revendications 1 à 5.
